# EUROPÄISCHE PATENTSCHRIFT

(11) **EP 1 182 906 B1**
(45) Veröffentlichungstag und Bekanntmachung des Hinweises auf die Patenterteilung: **09.10.2013**
(21) Anmeldenummer: 01119390.1
(22) Anmeldetag: 11.08.2001
(51) Int. Cl.: H04B 1/20

(54) **Vorrichtung für die Wiedergabe von Audiosignalen**
Device for the reproduction of audio signals
Dispositif pour la reproduction de signaux audio

(30) Priorität: 24.08.2000 DE 10041483
(43) Veröffentlichungstag der Anmeldung: 27.02.2002
(73) Patentinhaber: Grundig Multimedia AG, 6362 Stansstad (CH)
(72) Erfinder: Bauerschmidt, Werner, 90579 Langenzenn (DE)
(74) Vertreter: Louis Pöhlau Lohrentz

(56) Entgegenhaltungen:
- DE-A1- 3 415 646
- US-A- 5 386 478
- US-A- 6 069 567

## Beschreibung

Die vorliegende Erfindung betrifft eine Vorrichtung für die Wiedergabe von Audiosignalen, insbesondere von mehrkanaligen Audiosignalen.

Es sind Vorrichtungen für die Wiedergabe von Audiosignalen bekannt, bei denen mehrkanalige Audiosignale wiedergegeben werden. Vorrichtungen für die Wiedergabe von zwei Audiosignalen dienen beispielsweise der Wiedergabe von stereophonen Audiosignalen, die einen räumlichen Klangeindruck hervorrufen. Vorrichtungen für die Wiedergabe von fünf Audiosignalen dienen beispielsweise der Wiedergabe von Audiosignalen, die surround-codiert sind. Derartige Audiosignale rufen einen besonders plastischen räumlichen Klangeindruck hervor.

Beim Betrieb der bekannten Vorrichtungen tritt jedoch das Problem auf, daß zur Erzielung des gewünschten räumlichen Klangeindrucks die für die Wiedergabe der mehrkanaligen Audiosignale verwendeten Lautsprecher möglichst zentriert zu einer Hörposition aufgestellt werden müssen, um den gewünschten räumlichen Klangeindruck bestmöglich erzielen zu können. Weitere Probleme bei der Wiedergabe der mehrkanaligen Audiosignale können durch die Form des Raums oder die im Raum vorhandenen Gegenstände wie Möbel usw. hervorgerufen werden, die ebenfalls zu einer Verschlechterung des räumlichen Klangeindrucks führen können.

Um die bekannten Probleme auszugleichen, kann der Raum in dem die Vorrichtung zur Wiedergabe von Audiosignalen bzw. ihre Lautsprecher aufgestellt ist bzw. sind von einem Tontechniker vermessen werden und die mehrkanaligen Audiosignale können vor der Wiedergabe beispielsweise mittels eines Equalisers derart verändert werden, daß bei der Wiedergabe der gewünschte räumliche Klangeindruck, trotz der störenden Einflüsse, bestmöglich erzeugt wird.

Das Vermessen des Aufstellungsraums durch einen Tontechniker und die Verwendung eines zusätzlichen Equalisers für die Beeinflussung der mehrkanaligen Audiosignale zu Erzielung eines optimalen räumlichen Klangeindrucks setzt Fachwissen voraus und stellt einen hohen Aufwand dar, der beispielsweise im privaten Bereich zu hoch ist, um in größerem Umfang eingesetzt zu werden.

Aus US 6,069,567 A ist eine Fernbedienung bekannt, welche die akustische Charakteristik eines Audiosystems aufzeichnen kann. Hierzu sind in der Fernbedienung Mikrophone integriert, welche die Audiosignale, welche von einer Lautsprechereinheit abgestrahlt werden, aufnimmt und diese an die Audioeinheit zurücksendet, während ein Nutzer Einstellungen über die Fernbedienung vornimmt.

Aus DE 34 15 646 A1 ist eine fernbedienbare Anordnung zur Einstellung der Balance im Tonübertragungsteil einer Anordnung zur Wiedergabe eines stereophonen Tonereignisses bekannt. Mittels in einer Fernbedienung integrierten Mikrophonen ist die Anordnung die Balance eines Stereosignals in Abhängigkeit vom Ort der Fernbedienung einstellbar, indem Testsignale von den Lautsprechern der Anordnung an die Verbindung übertragen werden und in Reaktion auf die empfangenen Signale die Balance angepasst wird.

Aus US 5,386,478 A1 ist eine Vorrichtung bekannt, welche bei stereophonen Systemen die Lautstärke in Abhängigkeit der Entfernung einer Fernbedienung von den Lautsprechern automatisch einstellen kann. Hierzu weist die Fernbedienung ein Mikrophon auf, wobei die Fernbedienung in Reaktion auf die vom Mikrophon empfangenen Audiodaten die Lautstärke in der Weise regelt, dass diese bezogen auf den aktuellen Ort der Fernbedienung stetig konstant bleibt.

Es ist daher Aufgabe der vorliegenden Erfindung, eine Vorrichtung zur Wiedergabe von Audiosignalen, insbesondere mehrkanaligen Audiosignalen, anzugeben, die einfach und ohne großen Aufwand auch von einem Laien an die jeweiligen Raumverhältnisse angepaßt werden kann, bzw. die sich selbst den Raumverhältnissen anpaßt.

Bei der vorliegenden Erfindung wird diese Aufgabe durch die Merkmale der nebengeordneten Ansprüche gelöst.

Bei der Erfindung wird dabei von der Überlegung ausgegangen, daß eine für die Bedienung der Vorrichtung zur Wiedergabe von mehrkanaligen Audiosignalen vorhandene Bedieneinrichtung verwendetet wird, um die Wiedergabe der Audiosignale den jeweiligen räumlichen Verhältnissen, insbesondere der Form, Art und Ausgestaltung des Raums sowie der Aufstellung von zu der Vorrichtung gehörigen elektroakustischen Signalwandlern, anzupassen. Dazu verfügt die Bedieneinrichtung über eine Signalerfassungseinrichtung für die Erfassung von Testsignalen, die mittels der elektroakustischen Signalwandler abgestrahlt werden. Die von der Signalerfassungseinrichtung erfaßten Testsignale werden von der Vorrichtung für die Anpassung an die jeweiligen räumlichen Verhältnisse ausgewertet und die Wiedergabe von Audiosignalen wird entsprechend der räumlichen Verhältnisse verändert.

Der Vorteil der Erfindung ist darin zu sehen, daß die Vorrichtung ohne großen Aufwand realisiert werden kann, da sie im wesentlichen auf ohnehin in der Vorrichtung für die Wiedergabe von Audiosignalen vorhandene Bestandteile zurückgreift. So kann beispielsweise für die Anpassung der Audiosignale eine Signalverarbeitungseinrichtung der Vorrichtung verwendet werden, um z. B. die Phase- und/oder Amplitude, die Balance, einzelne Frequenzbänder (z. B. Höhen, Tiefen) usw., zur Anpassung zu verändern. Zudem erlaubt die Verwendung der Bedieneinrichtung durch den Benutzer der Vorrichtung eine einfache und unproblematische Anpassung an die jeweiligen räumlichen Verhältnisse. Der Benutzer muß zur Anpassung an die jeweiligen räumlichen Verhältnisse nicht über spezielles Wissen verfügen, da die Anpassung durch die Vorrichtung selbst vorgenommen wird.

Bei einer vorteilhaften Weiterbildung werden die Audiosignale automatisch an die jeweilige Hörposition des Benutzers angepaßt. Dazu wird von der Vorrichtung laufend ermittelt, wo sich der Benutzer im Wiedergaberaum befindet, wozu ebenfalls die Bedieneinrichtung verwendet wird, die der Benutzer zu diesem Zwecke mit sich führen muß.

Der Vorteil der Weiterbildung ist darin zu sehen, daß sich der Benutzer an nahezu jeder beliebigen Stelle im Wiedergaberaum befinden kann und dennoch ein guter räumlicher Klangeindruck für ihn wahrnehmbar ist. Auf die bisher nötige, möglichst zentrierte Position zu den elektroakustischen Signalwandlern kann deshalb verzichtet werden.

Weitere Vorteile der vorliegenden Erfindung ergeben sich aus den abhängigen Ansprüchen sowie der nachfolgenden Beschreibung von Ausführungsformen erfindungsgemäßer Vorrichtungen anhand von Figuren.

Es zeigt:
- Fig. 1: ein Prinzipschaltbild eines ersten Ausführungsbeispiels einer Vorrichtung für die Wiedergabe Audiosignalen,
- Fig. 2: ein Prinzipschaltbild eines zweiten Ausführungsbeispiels einer Vorrichtung für die Wiedergabe von Audiosignalen, und
- Fig. 3: ein Beispiel für den Betrieb der Vorrichtung für die Wiedergabe von Audiosignalen nach dem zweiten Ausführungsbeispiel.

Zur Erleichterung des Verständnisses der vorliegenden Erfindung sind in den Figuren nur die Bestandteile der Ausführungsbeispiele dargestellt, die im Zusammenhang mit der Erfindung von Bedeutung sind. Gleichartige Bestandteile in unterschiedlichen Figuren weisen die selben Bezugszeichen auf.

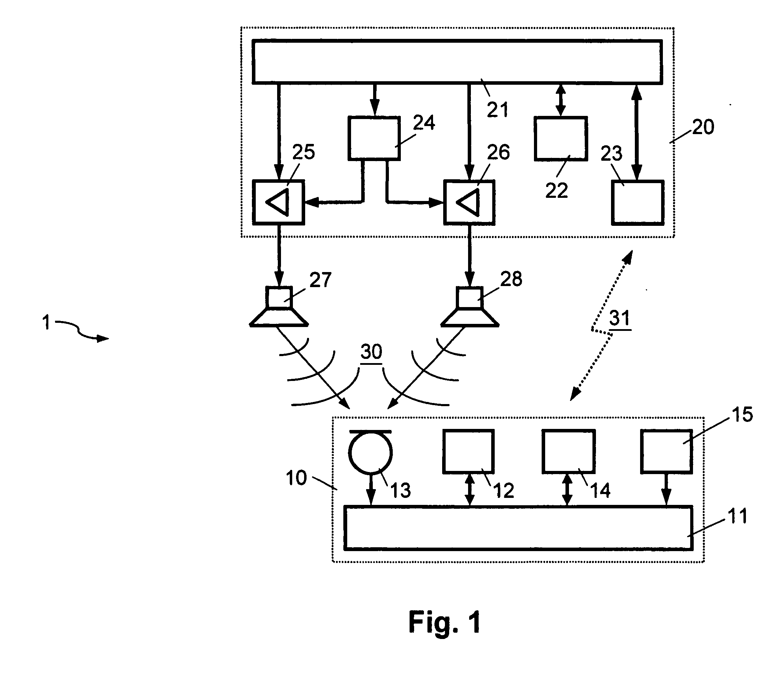

Figur 1 zeigt ein Prinzipschaltbild eines ersten Ausführungsbeispiels einer Vorrichtung 1 für die Wiedergabe von mehrkanaligen Audiosignalen, z. B. stereophonen Audiosignalen. Die Vorrichtung 1 weist eine Einrichtung 20 zur Erzeugung von Audiosignalen, z. B. eine stereophone Audioanlage oder ein Fernsehgerät mit Stereotonteil, elektroakustische Signalwandler 27, 28, beispielsweise Lautsprecher, sowie eine Bedieneinrichtung 10, die insbesondere drahtlos, z. B. mittels Infrarot oder Funk 31 mit der Einrichtung 20 verbunden ist, auf.

Die Einrichtung 20 zur Erzeugung von Audiosignalen weist eine Steuereinrichtung 21, beispielsweise einem Mikroprozessor, mit zugehörigem Speicher 22 auf, die eine Signalverarbeitungseinrichtung 24 für stereophone Audiosignale sowie an die Signalverarbeitungseinrichtung 24 angeschlossene Verstärker 25, 26 steuert. Die Signalverarbeitungseinrichtung 24 weist eine Signalquelle auf oder ist an eine Signalquelle angeschlossen, wie z. B. einen CD-Spieler oder ein Empfangsteil für Rundfunksignale. Um einem Benutzer die Bedienung der Einrichtung 20 zur Erzeugung von Audiosignalen zu ermöglichen, ist ein Fernbedienungsempfänger 23 vorhanden, der mit der Steuereinrichtung 21 verbunden ist.

Die Bedieneinrichtung 10 weist einen Fernbedienungsgeber 14 auf, der die Bedieneinrichtung 10 mit der Einrichtung 20 zur Erzeugung von Audiosignalen verbindet, beispielsweise mittels eines Infrarot- oder Funksignals 31. Der Fernbedienungsgeber 14 ist mit einer Steuereinrichtung 11, beispielsweise einem Mikroprozessor, verbunden. Die Steuereinrichtung 11 verfügt über einen zugehörigen Speicher 12, eine Eingabeeinrichtung 15 für den Benutzer, beispielsweise eine Tastatur, sowie eine Signalerfassungseinrichtung 13, beispielsweise ein Mikrophon.

Zur Anpassung der Vorrichtung 1 an die jeweiligen räumlichen Verhältnisse am Aufstellungsort der Vorrichtung 1 kann es vorgesehen sein, daß, z. B. bei der erstmaligen Inbetriebnahme der Vorrichtung 1 oder durch Auswahl des Benutzers mittels der Tastatur 15, Testsignale von der Vorrichtung 1 erzeugt werden. Die Testsignale können im Speicher 22 dauerhaft abgelegt sein und von der Steuereinrichtung 21 ausgelesen werden, um an die Signalverarbeitungseinrichtung 24 weitergegeben zu werden. Von der Signalverarbeitungseinrichtung 24 werden die von der Steuereinrichtung 22 stammenden digitalen Testsignale in analoge Testsignale umgewandelt, an die Verstärker 25, 26 weitergegeben, welche die Testsignale verstärken. Die verstärkten Testsignale werden mittels der Lautsprecher 27, 28 in akustische Testsignale 30 gewandelt und von diesen abgestrahlt.

Bei den Testsignalen 30 handelt es sich vorzugsweise um Einzeltöne unterschiedlicher Frequenz, einem definierten Gemisch vorgegebenen Tönen unterschiedlicher Frequenz, einem Rauschen, insbesondere eine Pseudo-Random Rauschen, oder dem wiederzugebenden Audiosignal, dessen Zusammensetzung bekannt ist.

Die Testsignale 30 werden vom Mikrophon 13 der Bedieneinrichtung 10 erfaßt und an die Steuereinrichtung 11 übergeben. In dieser oder in einem nicht dargestellten, vorgeschalteten Analog/Digital-Wandler wird das analoge Signal des Mikrophons in ein digitales Signal gewandelt und von der Steuereinrichtung 11 ausgewertet. Für die Auswertung des Signals ist ein Analyseprogramm im Speicher 12 der Bedieneinrichtung 10 dauerhaft abgelegt. Insbesondere sind im Analyseprogramm die Daten der empfangenen Testsignale 30 bekannt, wodurch die Auswertung der vom Mikrophon 13 stammenden Signale Rückschlüsse auf die räumlichen Verhältnisse am Aufstellungsort der Vorrichtung 1 erlaubt. Die so von der Steuereinrichtung 11 ermittelten Informationen über die räumlichen Verhältnisse werden nach Beendigung der Analyse oder bereits während der Analyse mittels des Fernbedienungsgebers 14 an die Einrichtung 20 zur Erzeugung von Audiosignalen übertragen und vom Fernbedienungsempfänger 23 empfangen.

Vom Fernbedienungsempfänger 23 werden die Informationen über die räumlichen Verhältnisse an die Steuereinrichtung 21 weitergegeben und für den weiteren Betrieb dauerhaft im Speicher 22 gespeichert. Die Informationen über die räumlichen Verhältnisse werden von der Steuereinrichtung 21 weiter aufbereitet. Aus den Informationen über die räumlichen Verhältnisse werden Korrekturdaten bestimmt, welche bei der späteren Wiedergabe von Audiosignalen einen möglichst guten räumlichen Klangeindruck ermöglichen. Die Korrekturdaten können beispielsweise Phasen- und/oder Amplitudenänderungen, eine Veränderung der Balance, einzelner Frequenzbänder (z. B. Höhen, Tiefen) usw. der wiederzugebenden Audiosignale bewirken. Dazu werden die Korrekturdaten von der Steuereinrichtung an die Signalverarbeitungseinrichtung 24 weitergegeben, welche die Korrekturdaten bei der Aufbereitung der Audiosignale der Signalquelle berücksichtigt. Die derart korrigierten Audiosignale werden - wie oben beschrieben - mittels der Verstärker 25, 26 verstärkt und von den Lautsprechern 27, 28 in akustische Signale gewandelt, um einen den räumlichen Verhältnissen am Aufstellungsort bestmöglich angepaßten räumlichen Klangeindruck zu erzeugen.

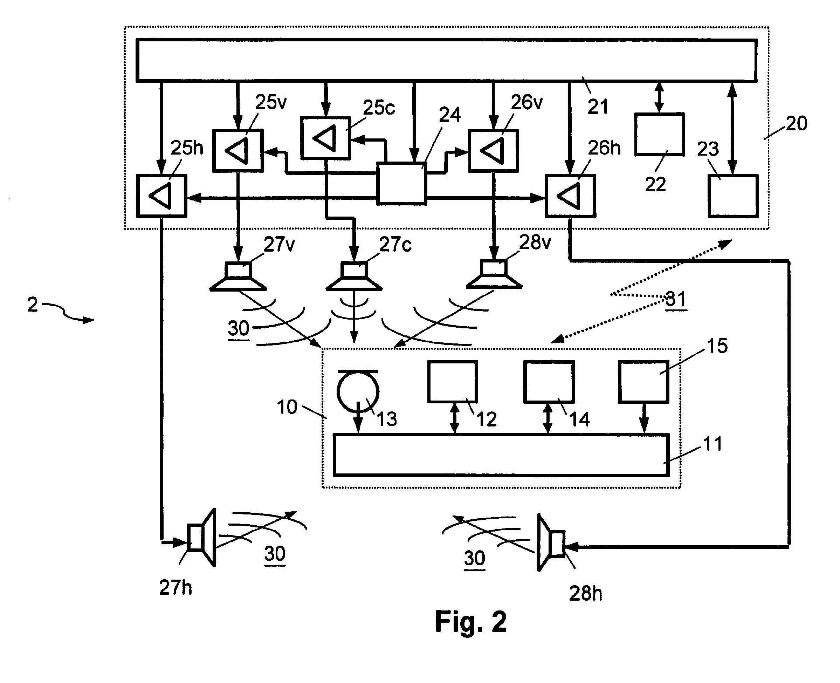

Figur 2 zeigt ein Prinzipschaltbild eines zweiten Ausführungsbeispiels einer Vorrichtung 2 für die Wiedergabe von Audiosignalen. Die Vorrichtung 2 weist eine Einrichtung 20 zur Erzeugung von mehrkanaligen Audiosignalen, z. B. eine Surround- Audioanlage oder ein Fernsehgerät mit Surroundtonteil, elektroakustische Signalwandler 27, 28, beispielsweise Lautsprecher, sowie eine Bedieneinrichtung 10, die insbesondere drahtlos, z. B. mittels Infrarot oder Funk 31 mit der Einrichtung 20 verbunden ist, auf. Wie bei Surround-Audioanlagen üblich, umfassen die Lautsprecher 27, 28 einen Center-Lautsprecher 27c, vordere Lautsprecher 27v und 28v sowie hintere Lautsprecher 27h und 28h.

Die Einrichtung 20 zur Erzeugung von Audiosignalen weist eine Steuereinrichtung 21, beispielsweise einem Mikroprozessor, mit zugehörigem Speicher 22 auf, die eine Signalverarbeitungseinrichtung 24 für mehrkanalige Audiosignale sowie an die Signalverarbeitungseinrichtung 24 angeschlossene Verstärker 25c,h,v und 26h,v steuert. Die Signalverarbeitungseinrichtung 24 weist eine Signalquelle auf oder ist an eine Signalquelle angeschlossen, wie z. B. einen CD-Spieler oder ein Empfangsteil für Rundfunksignale. Um einem Benutzer die Bedienung der Einrichtung 20 zur Erzeugung von Audiosignalen zu ermöglichen, ist ein Fernbedienungsempfänger 23 vorhanden, der mit der Steuereinrichtung 21 verbunden ist.

Die Bedieneinrichtung 10 weist einen Fernbedienungsgeber 14 auf, der die Bedieneinrichtung 10 mit der Einrichtung 20 zur Erzeugung von Audiosignalen verbindet, beispielsweise mittels eines Infrarot- oder Funksignals 31. Der Fernbedienungsgeber 14 ist mit einer Steuereinrichtung 11, beispielsweise einem Mikroprozessor, verbunden. Die Steuereinrichtung 11 verfügt über einen zugehörigen Speicher 12, eine Eingabeeinrichtung 15 für den Benutzer, beispielsweise eine Tastatur, sowie eine Signalerfassungseinrichtung 13, beispielsweise ein Mikrophon.

Zur Anpassung der Vorrichtung 2 an die jeweiligen räumlichen Verhältnisse am Aufstellungsort der Vorrichtung 2 kann es vorgesehen sein, daß, z. B. bei der erstmaligen Inbetriebnahme der Vorrichtung 2 oder durch Auswahl des Benutzers mittels der Tastatur 15, Testsignale von der Vorrichtung 2 erzeugt werden. Die Testsignale können im Speicher 22 dauerhaft abgelegt sein und von der Steuereinrichtung 21 ausgelesen werden, um an die Signalverarbeitungseinrichtung 24 weitergegeben zu werden. Von der Signalverarbeitungseinrichtung 24 werden die von der Steuereinrichtung 22 stammenden digitalen Testsignale in analoge Testsignale umgewandelt, an die Verstärker 25, 26 weitergegeben, welche die Testsignale verstärken. Die verstärkten Testsignale werden mittels der Lautsprecher 27, 28 in akustische Testsignale 30 gewandelt und von diesen abgestrahlt.

Bei den Sourround-Testsignalen 30 handelt es sich vorzugsweise um Einzeltöne unterschiedlicher Frequenz, einem definierten Gemisch vorgegebenen Tönen unterschiedlicher Frequenz, einem Rauschen, insbesondere eine Pseudo-Random Rauschen, oder dem wiederzugebenden Audiosignal, dessen Zusammensetzung bekannt ist.

Die Testsignale 30 werden vom Mikrophon 13 der Bedieneinrichtung 10 erfaßt und an die Steuereinrichtung 11 übergeben. In dieser oder in einem nicht dargestellten, vorgeschalteten Analog/Digital-Wandler wird das analoge Signal des Mikrophons in ein digitales Signal gewandelt und von der Steuereinrichtung 11 ausgewertet. Für die Auswertung des Signals ist ein Analyseprogramm im Speicher 12 der Bedieneinrichtung 10 dauerhaft abgelegt. Insbesondere sind im Analyseprogramm die Daten der empfangenen Testsignale 30 bekannt, wodurch die Auswertung der vom Mikrophon 13 stammenden Signale Rückschlüsse auf die räumlichen Verhältnisse am Aufstellungsort der Vorrichtung 2 erlaubt. Die so von der Steuereinrichtung 11 ermittelten Informationen über die räumlichen Verhältnisse werden nach Beendigung der Analyse oder bereits während der Analyse mittels des Fernbedienungsgebers 14 an die Einrichtung 20 zur Erzeugung von Audiosignalen übertragen und vom Fernbedienungsempfänger 23 empfangen.

Vom Fernbedienungsempfänger 23 werden die Informationen über die räumlichen Verhältnisse an die Steuereinrichtung 21 weitergegeben und für den weiteren Betrieb dauerhaft im Speicher 22 gespeichert. Die Informationen über die räumlichen Verhältnisse werden von der Steuereinrichtung 21 weiter aufbereitet. Aus den Informationen über die räumlichen Verhältnisse werden Korrekturdaten bestimmt, welche bei der späteren Wiedergabe von Audiosignalen einen möglichst guten räumlichen Klangeindruck ermöglichen. Die Korrekturdaten können beispielsweise Phasen- und/oder Amplitudenänderungen, eine Veränderung der Balance, einzelner Frequenzbänder (z. B. Höhen, Tiefen) usw. der wiederzugebenden Audiosignale bewirken. Dazu werden die Korrekturdaten von der Steuereinrichtung an die Signalverarbeitungseinrichtung 24 weitergegeben, welche die Korrekturdaten bei der Aufbereitung der Audiosignale der Signalquelle berücksichtigt. Die derart korrigierten Audiosignale werden - wie oben beschrieben - mittels der Verstärker 25, 26 verstärkt und von den Lautsprechern 27, 28 in akustische Signale gewandelt, um einen den räumlichen Verhältnissen am Aufstellungsort bestmöglich angepaßten räumlichen Klangeindruck zu erzeugen.

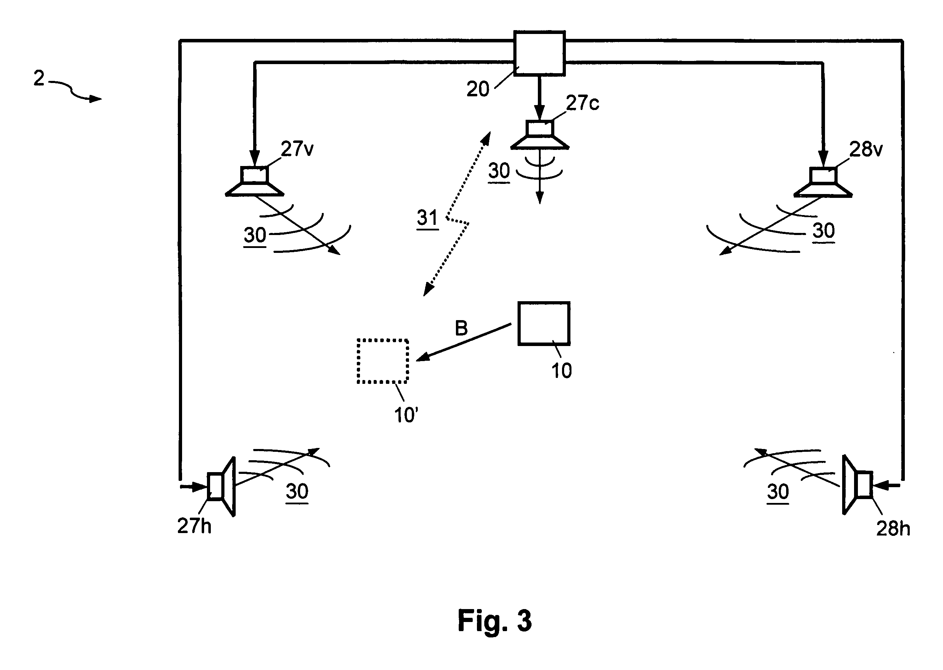

Figur 3 zeigt eine Weiterbildung der Vorrichtung 2 für die Wiedergabe von Audiosignalen nach dem zweiten Ausführungsbeispiel. Die nachfolgend beschriebene Weiterbildung kann analog auch bei der Vorrichtung 1 nach dem ersten Ausführungsbeispiel verwendet werden.

In Figur 3 ist eine Ausgangssituation dargestellt, bei der sich die Bedieneinrichtung 10 in einer zentrierten Position zu den Lautsprechern 27c,v,h und 28v,h befindet. Für diese Position wurde beispielsweise - wie oben beschrieben - eine Analyse der räumlichen Verhältnisse des Aufstellungsorts der Vorrichtung 2 durchgeführt und entsprechende Korrekturwerte wurden für den Betrieb ermittelt. Wird die Bedieneinrichtung 10 vom Benutzer zu einer neuen Position 10' bewegt, wie beispielsweise durch Pfeil B dargestellt, erfolgt eine Veränderung der Korrekturdaten auf die neue Hörposition derart, daß für die neue Position 10' der bestmöglich erzielbare räumliche Klangeindruck entsteht. Dazu werden ebenfalls - wie bereits oben erläutert - Phasen- und/oder Amplitudenänderungen, eine Veränderung der Balance, einzelner Frequenzbänder (z. B. Höhen, Tiefen) usw. vorgenommen.

Die jeweils aktuelle Position des Benutzers bzw. der Bedieneinrichtung 10 wird dadurch ermittelt, daß in den akustischen Signalen 30 ständig nicht hörbare Testsignale bei der Wiedergabe von Audiosignalen enthalten sind. Die Auswertung der Testsignale ermöglicht die Positionsbestimmung innerhalb des Aufstellungsraums sowie damit zusammenhängende Veränderungen die durch den Aufstellungsraum bedingt sind.

Auf Testsignale in den akustischen Signalen 30 kann verzichtet werden, wenn zur Positionsbestimmung die akustischen Audiosignale ausgewertet werden und zusätzlich Informationen über die von den einzelnen Lautsprechern 27c,v,h und 28v,h abgestrahlten akustischen Audiosignale in der Bedieneinrichtung 10 zur Verfügung stehen. Die zusätzlichen Informationen können beispielsweise mittels der drahtlosen Verbindung 31 von der Einrichtung 20 zur Wiedergabe der Audiosignale an die Bedieneinrichtung 10 übertragen werden. Die Auswertung der Audiosignale erfolgt dann beispielsweise durch Bestimmung der Laufzeiten der Signale der einzelnen Kanäle.

Eine weitere Möglichkeit zur Bestimmung der Position kann dann ausgenutzt werden, wenn auch die Lautsprecher 27, 28 drahtlos mit der Einrichtung 20 zur Wiedergabe der Audiosignale verbunden sind. Durch die Auswertung der Übertragungssignale der Lautsprecher 27, 28 bzw. der Bedieneinrichtung 10 ist dann ebenfalls eine Positionsbestimmung für die Bedieneinrichtung 10 möglich, wodurch die oben beschriebene Nachführung der Hörposition ermöglicht wird.

Abweichend von den oben beschriebenen Ausführungsformen kann es auch vorgesehen sein, daß die gesamte Auswertung der Testsignale in der Einrichtung 20 zur Wiedergabe der Audiosignale erfolgt. In diesem Fall werden die vom Mikrophon 13 empfangenen Testsignale bzw. Positionsinformationen über die drahtlose Verbindung 31 an die Einrichtung 20 zur Wiedergabe von Audiosignalen übertragen und in der Steuereinrichtung 21 ausgewertet.

## Patentansprüche

1. Vorrichtung für die Wiedergabe von mehrkanaligen Audiosignalen, mit einer Einrichtung (20) zur Erzeugung der mehrkanaligen Audiosignale und einer Bedieneinrichtung (10) zur Steuerung der Einrichtung (20) zur Erzeugung der mehrkanaligen Audiosignale,
**dadurch gekennzeichnet, dass**
die Einrichtung (20) zur Erzeugung der mehrkanaligen Audiosignale Testsignale erzeugt, die Bedieneinrichtung (10) eine Signalerfassungseinrichtung aufweist, mittels der Signalerfassungseinrichtung erfasste Testsignale in der Bedieneinrichtung (10) und/oder der Einrichtung (20) zur Erzeugung der mehrkanaligen Audiosignale ausgewertet werden, wobei Korrekturdaten ermittelt werden, welche räumliche Verhältnisse des Aufstellungsorts der Vorrichtung berücksichtigen, die Einrichtung (20) zur Erzeugung von mehrkanaligen Audiosignalen die Korrekturdaten bei der Erzeugung von mehrkanaligen Audiosignalen berücksichtigt, wobei die Einrichtung (20) zur Erzeugung von mehrkanaligen Audiosignalen surround-codierte Audiosignale erzeugt und die Vorrichtung die Position der Bedieneinrichtung (10) am Aufstellungsort ermittelt und die Korrekturdaten nach Maßgabe der ermittelten Position verändert und wobei die Position der Bedieneinrichtung (10) durch Auswertung von nicht hörbaren Testsignalen ermittelt wird, wobei die Testsignale zusammen mit mehrkanaligen Audiosignalen von der Einrichtung (20) zur Erzeugung von mehrkanaligen Audiosignalen erzeugt werden, von der Signalerfassungseinrichtung (13) erfasst werden und die erfassten Testsignale oder die Positionen an die Einrichtung (20) zur Erzeugung von mehrkanaligen Audiodaten übermittelt werden.

2. Vorrichtung nach Anspruch 1, **dadurch gekennezeichnet, dass** die Einrichtung (20) zur Erzeugung von mehrkanaligen Audiosignalen und die Bedieneinrichtung (10) über eine uni- oder bidirektionale Funk- oder Infrarotverbindung verbunden sind.

3. Vorrichtung nach einem der Ansprüche 1 oder 2, **dadurch gekennzeichnet, dass** die Vorrichtung Bestandteil eines Fernsehgerätes ist.

4. Vorrichtung nach einem der Ansprüche 1 bis 3, **dadurch gekennzeichnet, dass** die Vorrichtung Bestandteil einer Audioanlage ist.

5. Bedieneinrichtung (10) für die Bedienung einer Vorrichtung nach einem der vorstehenden Ansprüche.

6. Bedieneinrichtung nach Anspruch 5, **dadurch gekennzeichnet, dass** die Signalerfassungseinrichtung (13) von einem Mikrophon gebildet wird.

## Claims

1. Apparatus for reproducing multi-channel audio signals having a device (20) for generating the multi-channel audio signals and an operating device (10) for controlling the device (20) for generating the multi-channel audio signals,
**characterised in that**,
the device (20) for generating the multi-channel audio signals generates test signals, the operating device (10) has a signal detection device, by means of which signal detection device registered test signals are evaluated in the operating device (10) and/or the device (20) for generating the multi-channel audio signals, wherein correction data is determined, which takes into account spatial circumstances of the location of the apparatus, the device (20) for generating multi-channel audio signals takes into account the correction data during the generation of multi-channel audio signals, wherein the device (20) for generating multi-channel audio signals generates surround-coded audio signals and the apparatus determines the position of the operating device (10) at the location and the correction data changes in accordance with the detected position, and wherein the position of the operating device (10) is detected by evaluating inaudible test signals, wherein the test signals, together with multi-channel audio signals, are detected by the device (20) for generating multi-channel audio signals, are registered by the signal detection device (13) and the registered test signals or the positions are transferred to the device (20) for generating multi-channel audio data.

2. Apparatus according to claim 1,
**characterised in that**,
the device (20) for generating multi-channel audio signals and the operating device (10) are connected via a uni-directional or bi-directional radio or infrared connection.

3. Apparatus according to one of claims 1 or 2,
**characterised in that**,
the apparatus is a component of a television device.

4. Apparatus according to one of claims 1 to 3,
**characterised in that**,
the apparatus is a component of an audio system.

5. Operating device (10) for the operation of an apparatus according to one of the preceding claims.

6. Operating device according to claim 5,
**characterised in that**,
the signal detection device (13) is formed from a microphone.

## Revendications

1. Dispositif pour la reproduction de signaux audio multicanaux, comportant un système (20) pour générer des signaux audio multicanaux et un système de commande (10) destiné à commander le système (20) pour générer des signaux audio multicanaux,
**caractérisé en ce que** le système (20) pour générer des signaux audio multicanaux génère des signaux de test, le système de commande (10) comporte un système de détection des signaux, au moyen duquel des signaux de test, détectés par le système de détection des signaux, sont analysés dans le système de commande (10) et/ou le système (20) pour générer des signaux audio multicanaux, des données de correction étant déterminées, lesquelles tiennent compte des rapports spatiaux du lieu d'installation du dispositif, ledit système (20) pour générer des signaux audio multicanaux tient compte des données de correction pendant qu'il génère des signaux audio multicanaux, ledit système (20) pour générer des signaux audio multicanaux générant des signaux audio codés sous forme ambiophonique et le dispositif déterminant la position du système de commande (10) sur le lieu d'installation, et les données de correction sont modifiées en fonction de la position déterminée et la position du système de commande (10) est déterminée par l'analyse des signaux de test non audibles, les signaux de test étant générés conjointement avec des signaux audio multicanaux par le système (20) pour générer des signaux audio multicanaux, étant détectés par le système de détection des signaux (13), et les signaux de test détectés ou les positions sont transmises au système (20) pour générer des signaux audio multicanaux.

2. Dispositif selon la revendication 1, **caractérisé en ce que** le système (20) pour générer des signaux audio multicanaux et le système de commande (10) sont reliés via une liaison radio ou infrarouge unidirectionnelle ou bidirectionnelle.

3. Dispositif selon la revendication 1 ou 2, **caractérisé en ce que** ledit dispositif fait partie intégrante d'un téléviseur.

4. Dispositif selon l'une quelconque des revendications 1 à 3, **caractérisé en ce que** ledit dispositif fait partie intégrante d'une installation audio.

5. Système de commande (10) destiné à commander un dispositif selon l'une quelconque des revendications précédentes.

6. Système de commande (10) selon la revendication 5, **caractérisé en ce que** le système de détection des signaux (13) est formé par un microphone.
